# EUROPÄISCHE PATENTANMELDUNG

(11) **EP 1 215 134 A1**
(43) Veröffentlichungstag der Anmeldung: **19.06.2002**
(21) Anmeldenummer: 01129130.9
(22) Anmeldetag: 07.12.2001
(51) Int. Cl.: B65D 81/00, B01D 39/16

(54) **Filtermaterial mit verbesserten Infusionseigenschaften**

(30) Priorität: 13.12.2000 DE 10062031
(71) Anmelder: PAPCEL - PAPIER UND CELLULOSE, TECHNOLOGIE UND HANDELS-GmbH, D-76584 Gernsbach (DE)
(72) Erfinder: Dannhauser, Horst, 76593 Gernsbach (DE); Meger, Danny, 76593 Gernsbach (DE); Salow, Hartmut, Dr., 22926 Ahrensburg (DE)
(74) Vertreter: Henkel, Feiler, Hänzel

(57) **Zusammenfassung**

Beschrieben werden ein Filtermaterial, insbesondere zur Herstellung von Filterbeuteln und Filtertüten für Aufgußgetränke, welches aufgrund seines Gehalts an große Mengen Flüssigkeit absorbierenden Superabsorber-Fasern auch ohne Bewegung in der Auslaugflüssigkeit eine optimale Auslaugung des auszulaugenden Füllguts ermöglicht, sowie ein Verfahren zur Herstellung eines solchen Filtermaterials.

## Beschreibung

Die vorliegende Erfindung betrifft ein Filtermaterial, bzw. -papier mit wesentlich verbesserten Infusionseigenschaften dergestalt, dass ein daraus gefertigter und mit einem auszulaugenden Gut gefüllter Beutel in kürzerer Zeit als ein einschlägig bekannter Beutel einen farb- und aromaintensiven Aufguss liefert.

Die Herstellung von Filtermaterialien für die Kalt- und Heißfiltration, z.B. Teebeutel, Kaffeebeutel, Filterbeutel für Aromen und/oder Gewürze und Filterpapiere für Tee oder Kaffee für die Getränkeindustrie ist auf dem einschlägigen Fachgebiet bekannt.

Im allgemeinen erfolgt die Herstellung eines Filtermaterials in an sich auf dem einschlägigen Fachgebiet bekannter Weise aus einem Filtergrundmaterial, z.B. aus Naturfasern oder einer Kombination aus Naturfasern und synthetischen Fasern unter Verwendung einer Spezialpapiermaschine.

In einer ersten Stufe wird eine wässrige Suspension von Naturfasern auf ein Papiermaschinensieb aufgebracht, worauf die Fasersuspension über erste Entwässerungskammern geleitet wird. Dabei bildet sich auf dem bewegten Sieb eine erste Faserschicht aus den Naturfasern. Im Falle der Herstellung eines heißsiegelfähigen Papiers aus sowohl Naturfasern als auch synthetischen Fasern werden dann in einer zweiten Stufe die heißsiegelfähigen synthetischen Fasern in Form einer zweiten Suspension bei der Weiterbewegung des Papiermaschinensiebes über zweite Entwässerungskammern geführt, wobei über den zweiten Entwässerungskammern eine zweite Schicht aus synthetischen Fasern auf der ersten Schicht abgelagert wird. Bei der Weiterbewegung des Papiermaschinensiebes mit den beiden aufeinander liegenden Faserschichten wird dann eine Trocknung vorgenommen, wobei die synthetischen Fasern an die erste Faserschicht angeschmolzen werden können, so dass sie sich mit den Naturfasern der ersten Schicht verbinden.

Hierbei kann es zu einer teilweisen Durchdringung der beiden Schichten kommen.

Das nach der beschriebenen Methode hergestellte heißsiegelfähige oder nicht heißsiegelfähige Filtermaterial wird schließlich auf Abpackautomaten zu Beuteln geformt und mit Tee gefüllt.

Es ist üblich, Tee mit einer hohen Anzahl von feinen Teepartikeln abzupacken. Wenn das Teefiltermaterial eine - wie auch erwünscht - hohe Porosität, d.h. Lochanzahl aufweist, fallen durch die Poren feine Teepartikelchen hindurch, was beim Gebrauch und auch beim Transport der Beutel äußerst unerwünscht ist. Eine Möglichkeit diesen Nachteil zu verhindern besteht darin, die Poren wesentlich kleiner zu gestalten, so dass der Teestaubausfall reduziert wird. Allerdings nimmt dabei die Teeinfusion ab.

In der EP 94 107 709.1 wird ein Teefiltermaterial beschrieben, das aus einer Basisschicht und einer sog. schmelzgeblasenen (Meltblown-) Polymerschicht besteht. Bei dem bekannten Teefiltermaterial sind ohne nennenswerte Verschlechterung der Infusion die notwendigen Poren gegeneinander versetzt, so dass der Teeausfall minimiert wird.

Gemäß der US-A-4 289 580 wird die Oberfläche des Filterpapiers mit einem Netzmittel hydrophiliert. Ferner wird auf der Papiermaschine eine hydrodynamische Perforation des Filtermaterials durchgeführt, um die Teeinfusion zu optimieren.

Wie erwähnt, ist bei der Verwendung eines Filtermaterials als Beutel für Tee und andere extrahierbare Füllgüter eine schnelle Auslaugung (Infusion) gewünscht. Bei den derzeit verwendeten Teefilterpapieren bildet sich jedoch ohne Bewegung des Beutels an der Grenzschicht Wasser - Filterpapier sehr schnell eine hohe Konzentration an extrahiertem Tee. Diese hohe Konzentration (Sperrkonzentration) behindert eine weitere Auslaugung des Füllguts "Tee", da das Konzentrationsgefälle zwischen Beutel innen und Beutel außen ohne Bewegung des Beutels nicht wieder hergestellt wird.

Aufgabe der vorliegenden Erfindung ist die Bereitstellung von Filtermaterialien bzw. -papieren insbesondere für Aufgussgetränke, die auch ohne Bewegung in der Auslaugflüssigkeit eine optimale Auslaugung des Füllguts ermöglichen. Aufgabe der vorliegenden Erfindung ist ferner, eine Verfahren zur Herstellung solcher Filtermaterialien bzw. -papiere anzugeben.

Die Lösung dieser Aufgabe beruht auf der Erkenntnis, dass beim Einarbeiten einer gewissen Menge stark wasserabsorbierender, auch als "Superabsorber-Fasern" bezeichneter Fasern, in das Filtergrundmaterial das fertige Filtermaterial in Beutelform in der Auslaugflüssigkeit nicht mehr bewegt werden muss, um eine optimale Auslaugung des Füllguts zu gewährleisten.

Gegenstand der Erfindung ist somit ein Filtermaterial insbesondere zur Herstellung von Filterbeuteln und Filtertüten für Aufgussgetränke, welches dadurch gekennzeichnet ist, dass es Superabsorber-Fasern in einer Menge zwischen 1-70 Gew.-%, bezogen auf das Flächengewicht des Filtermaterials, enthält.

Gegenstand der Erfindung ist ferner ein Verfahren zur Herstellung eines Filtermaterials insbesondere zur Herstellung von Filterbeuteln und Filtertüten für Aufgussmaterialien, welches dadurch gekennzeichnet ist, dass dem auf der Papiermaschine verwendeten Filtergrundmaterial in der Nasspartie der Papiermaschine Superabsorber-Fasern in einer Menge von 1-70 Gew.-%, bezogen auf des Flächengewicht des fertigen Filtermaterials, einverleibt werden.

Durch die in das erfindungsgemäße Filtermaterial eingearbeiteten Superabsorber-Fasern wird die oben beschriebene Sperrkonzentration an der Beuteloberfläche auch ohne mechanische Bewegung des Beutels aufgehoben, da die Superabsorber-Fasern bei der Wasseraufnahme eine starke Formänderung erfahren, sich bewegen und eine Mikroverwirbelung an der Grenzschicht herbeiführen. Durch diese Mikroverwirbelung durch die Superabsorber-Fasern wird das notwendige Konzentrationsgefälle an der Papiergrenzfläche wieder hergestellt. Das Ergebnis ist eine schnellere Auslaugung des Tees bzw. des Füllgutes.

Unter den erfindungsgemäß verwendeten stark wasserabsorbierenden Superabsorber-Fasern sind Fasern zu verstehen, die unter Quellung große Mengen Flüssigkeit, wie Wasser, z. B. bei freier Quellung innerhalb von etwa 20 min in Abhängigkeit vom Elektrolytgehalt der Flüssigkeit pro g Faser etwa 25, 30, 50, 60 oder sogar 85 g Flüssigkeit zu absorbieren vermögen (zum Vergleich absorbiert herkömmlicher Zellstoff nur etwa 3g Flüssigkeit pro g Faser). Bei den z.B. bereits als Materialien für Kabelabschirmungen oder in Windeln verwendeten, erfindungsgemäß einzusetzenden Superabsorber-Fasern handelt es sich üblicherweise um (Meth)Acrylat-Copolymere, z.B. Copolymere, die (Meth)Acrylat und Styrol, Acrylat und Methacrylat, Vinylacetat und (Meth)Acrylat, Vinylidenchlorid und (Meth)Acrylat, Acrylamid und (Meth)Acrylat oder Butadien und (Meth)acrylat umfassen. In stärker bevorzugter Weise handelt es sich bei den erfindungsgemäß verwendeten Copolymeren um quervernetzte Acrylatcopolymere, insbesondere um solche, die teilweise in einer Salzform, beispielsweise der Natriumsalzform vorliegen. Derartige Copolymere sind teilweise auch im Handel, z.B. unter der Handelsbezeichnung Oasis 101, 111, 112, 121 oder 122 von Technical Absorbents LTD., Grimsby, GB, oder Fiberan® und Fibergarb® von Camelot Technologies, High River, Alberta, Kanada erhältlich. Verwenbar sind auch modifizierte Copolymere aus Maleinsäureanhydrid und Isobutylen, z. B. Fibersorb® von Camelot Technologies Ltd..

Das erfindungsgemäße Filtermaterial weist üblicherweise ein Flächengewicht zwischen 8 und 90 g/m², vorzugsweise zwischen 10 und 25 g/m² auf. Das mit den Superabsorber-Fasern vereinigte Filtergrundmaterial kann aus Naturfasern und synthetischen Fasern bestehen. Bei den Naturfasern kann es sich beispielsweise um solche aus Nadelholzzellstoff und/oder Abaca-Faser handeln. Wenn es sich bei dem erfindungsgemäßen Filtermaterial um ein zweilagiges Filtermaterial handelt, macht die erste Schicht bzw. Lage üblicherweise 60 bis 90 Gew.-% und die zweite Schicht bzw. Lage 10 bis 40 Gew.-%, bezogen auf das Flächengewicht des Filtermaterials, aus. Üblicherweise besteht die erste Schicht aus Naturfasern sowie den erfindungsgemäß zuzusetzenden Superabsorber-Fasern. Wenn ein heißsiegelfähiges Filtermaterial hergestellt werden soll, kann erfindungsgemäß eine hauptsächlich aus siegelfähigen Polymerfasern bestehende zweite Schicht auf die erste Schicht aufgebracht werden. Dabei erhält man ist ein heißsiegelfähiges Filtermaterial.

Bei Durchführung des erfindungsgemäßen Verfahrens werden die Superabsorber-Fasern dem auf der Papiermaschine hergestellten Filtergrundmaterial zweckmäßigerweise in einer Menge von 1 bis 70 Gew.-%, günstigerweise 2 bis 30 Gew.-%, vorzugsweise von 3 bis 8 Gew.-%, bezogen auf das Flächengewicht des Filtermaterials, zugegeben. Die Fasern können beim üblichen Naßverfahren im Gemisch mit den Naturfasern eingesetzt werden. Die Faserbindung erfolgt wie üblich über die natürliche Wasserstoffbrückenbindung. Es ist allerdings auch möglich, die Superabsorber-Fasern durch eine Latexbindung, durch eine mechanische Verfilzung (Nadelverfilzung), durch eine hydrodynamische Verfestigung (Wasserstrahlen) oder durch eine thermische Bindung mit geeigneten synthetischen Bindefasern in das Filtermaterial zu integrieren.

Das folgende Beispiel soll die Erfindung näher veranschaulichen.

### Beispiel

Die im Vergleich zu Teebeuteln ohne Superabsorber-Fasern verbesserte Teeinfusion bei Beuteln, die Superabsorber-Fasern beinhalten, ist mit Hilfe eines Extinktionsmessung nachweisbar.

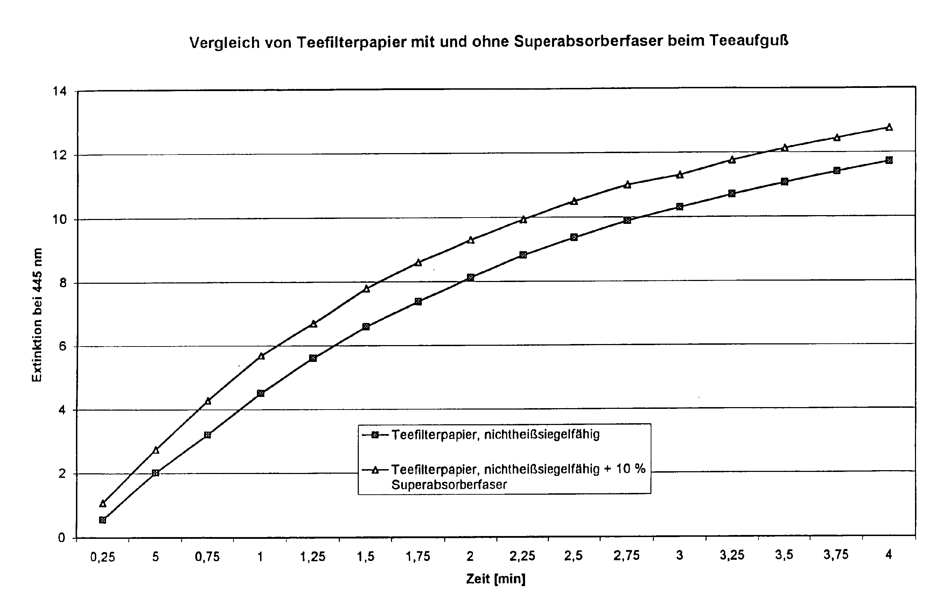

Für diese Messung werden Teebeutel eines Gesamtflächengewichts von 12,2 g/m² in herkömmlichen Abmessungen aus einem Filtergrundmaterial eines Flächengewichts von 11 g/m² mit etwa 1,2 g/m² Superabsorber-Fasern Oasis 101 bzw. ohne solche Fasern hergestellt und jeweils mit "Schwarztee" gefüllt. Ein Teebeutel wird mit einer bestimmten Menge kochendem Wassers übergossen. Mit Hilfe eines Pumpwerks wird der entstandene (gefärbte) Tee im Kreislauf durch ein Fotometer geführt. Ein Lichtstrahl mit einer Wellenlänge von 445 nm durchstrahlt die durchgepumpte Teeflüssigkeit. Die gemessene Extinktion wird digital aufgezeichnet. Die Extinktion ist ein Maß für die Schwächung eines Strahls durch Absorption in der Flüssigkeit. Je höher die Extinktion, um so dunkler ist der Teeaufguß. Die als Figur 1 beigefügte graphische Darstellung zeigt deutlich, dass z.B. bei der üblichen Aufgußzeit von 3 min. der aus Filtergrundmaterial und Superabsorber-Fasern hergestellte Teebeutel eine 8-10 %ig höhere Extinktion und damit bessere Teeinfusion aufweist als der herkömmliche Beutel.

Der Effekt der verbesserten Teeinfusion kann durch erhöhte Zugabe von Superabsorber-Fasern verbessert werden. Eine - auf das Flächengewicht des Filtermaterials bezogene - anteilige Menge zwischen 2 und 30 Gew.-%, vorzugsweise 3 und 10 Gew.-%, an Superabsorber-Fasern hat sich als besonders vorteilhaft erwiesen.

## Patentansprüche

1. Filtermaterial, insbesondere zur Herstellung von Filterbeuteln und Filtertüten für Aufgußgetränke, **dadurch gekennzeichnet, dass** es Superabsorber-Fasern in einer Menge zwischen 1-70 Gew.-%, bezogen auf das Flächengewicht des Filtermaterials, enthält.

2. Filtermaterial nach Anspruch 1, **dadurch gekennzeichnet, dass** das Flächengewicht zwischen 8 und 90 g/m², vorzugsweise zwischen 10 und 25 g/m² liegt.

3. Filtermaterial nach einem der Ansprüche 1 und 2, **dadurch gekennzeichnet, dass** das Filtergrundmaterial aus Naturfasern, wie z.B. Nadelholzzellstoff, Laubholzzellstoff und/oder Abaca-Fasern besteht.

4. Filtermaterial, nach einem der vorhergehenden Ansprüche, **dadurch gekennzeichnet, dass** es zweilagig aufgebaut ist, wobei die erste Lage Naturfasern und die Superabsorber-Fasern umfasst und auf die erste Lage eine zweite Lage aus siegelfähigen Polymerfasern aufgebracht ist.

5. Filtermaterial, nach einem der Ansprüche 1 bis 4, **dadurch gekennzeichnet, dass** es 2-30 Gew.-%, vorzugsweise 3-10 Gew.-%, bezogen auf das Flächengewicht des Filtermaterials, Superabsorber-Fasern enthält.

6. Verfahren zur Herstellung eines Filtermaterials nach einem der Ansprüche 1 - 5, **dadurch gekennzeichnet, dass** dem auf der Papiermaschine hergestellten Filtergrundmaterial in der Nasspartie der Papiermaschine 1-70 Gew.-%, zweckmäßigerweise 2-30 Gew.-%, vorzugsweise 3-8 Gew.-%, Superabsorber-Fasern, bezogen auf das Flächengewicht des Filtermaterials, einverleibt werden.

7. Verfahren nach Anspruch 6, **dadurch gekennzeichnet, dass** die Superabsorber-Fasern durch Latex oder andere chemische Bindemittel an das Filtergrundmaterial gebunden werden.

8. Verfahren nach Anspruch 6, **dadurch gekennzeichnet, dass** die Superabsorber-Fasern durch mechanische Verfestigung (z.B. Nadelung) an das Filtergrundmaterial gebunden werden.

9. Verfahren nach Anspruch 6, **dadurch gekennzeichnet, dass** die Superabsorber-Fasern durch hydrodynamische Verfestigung an das Filtergrundmaterial gebunden werden.

10. Verfahren nach einem der vorhergehenden Ansprüche, **dadurch gekennzeichnet, daß** die Superabsorber-Fasern aus einem (Meth)Acrylat-Copolymer bestehen.

11. Verfahren nach Anspruch 10, **dadurch gekennzeichnet, daß** die Superabsorber-Fasern aus einem quervernetzten Acrylatcopolymer, gegebenenfalls in Salzform, besteht.
